# FASCICULE DE BREVET EUROPEEN

(11) **EP 1 164 362 B1**
(45) Date de publication et mention de la délivrance du brevet: **17.12.2008**
(21) Numéro de dépôt: 01401081.3
(22) Date de dépôt: 26.04.2001
(51) Int. Cl.: G01F 11/04, G01F 11/16, G01F 11/08

(54) **Embout doseur pour la distribution d'une dose à volume variable et ensemble équipé d'un tel embout doseur**
Dosieransatz zum Ausbringen einer veränderbaren Dosis und ein Behälter mit einem solchen Dosieransatz
Dosing tip for distributing a variable dose and a container with such a dosing tip

(30) Priorité: 30.05.2000 FR 0006927
(43) Date de publication de la demande: 19.12.2001
(73) Titulaire: L'ORÉAL, 75008 Paris (FR)
(72) Inventeur: Bonningue, Philippe, 75020 Paris (FR)
(74) Mandataire: Boulard, Denis

(56) Documents cités:
- EP-A- 0 995 976
- US-A- 2 904 227
- US-A- 3 338 475
- US-A- 5 090 600
- US-A- 5 207 666

## Description

La présente invention a trait à un embout doseur pour la distribution, soit sous forme dosée, soit sous forme non dosée, d'un produit fluide, notamment un produit cosmétique tel qu'un shampooing, un après shampooing, un gel, une lotion, un lait, etc. L'invention concerne également un ensemble de conditionnement et de distribution équipé d'un embout doseur selon la présente invention, la distribution du produit au moyen d'un tel ensemble s'opérant en position tête en bas de ce dernier.

Dans le domaine de la cosmétique en particulier, bon nombre de produits capillaires, en particulier les shampooings, sont conditionnés dans des récipients à parois déformables dont le col est obturé par une paroi percée en son centre d'un ou plusieurs petits orifices pour la sortie du produit. Pour distribuer le produit, le récipient est retourné tête en bas. Une pression exercée sur les parois déformables du récipient permet de forcer le produit au travers du ou des orifices. Le produit est récupéré dans le creux de la main de celui ou celle qui l'utilise, et appliqué sur la chevelure. Ce geste simple ne permet pas toutefois, de doser la quantité de produit distribué. En effet, entre la première et la dernière utilisation du récipient, à pression exercée identique, la quantité distribuée varie de façon considérable. Ainsi, plus on se rapproche de la fin du récipient, et plus il faut appuyer fort pour provoquer la sortie d'une dose donnée.

Certes, il existe des dispositifs pour le dosage d'un produit à distribuer, mais, qui sont d'une complexité telle, que leur coût est totalement inadapté avec les impératifs économiques de certains circuits de distribution, en particulier la grande distribution.

Le brevet US-A-5 090 600 décrit un embout doseur du type comportant une chambre doseuse formée à l'intérieur d'un piston dont une extrémité libre est pourvue d'ouvertures aptes à permettre la sortie dosée du produit. Le dégagement des ouvertures de la chambre doseuse est obtenu au moyen d'une pression exercée par le produit sur une face du piston. Le produit s'écoule ensuite par gravité en position dégagée des ouvertures. Lors de la sortie du produit, l'élément de fermeture émerge de façon sensible hors de la chambre doseuse. Un tel embout est particulièrement approprié pour la distribution dosée de produits très liquides tels que des boissons. En revanche, un tel système peut difficilement être utilisé pour la distribution de produits visqueux, tels que couramment utilisés notamment dans le domaine de la cosmétique. En effet, la viscosité de ces produits, n'autorise pas un écoulement suffisamment rapide de la dose de produit, sous le seul effet de son poids.

Le brevet US-A-2 904 227 décrit un embout pour la distribution dosée d'un produit, comprenant une chambre de dosage à l'intérieur de laquelle est monté coulissant un piston. Le piston est traversé par un canal axial se terminant au voisinage de l'extrémité libre du piston par une portion radiale débouchant sur un orifice de sortie. En position de repos, l'orifice de sortie est obturé. Pour distribuer une dose de produit, l'orifice de sortie est dégagé sous la pression du produit s'exerçant sur le piston. Le produit circule au travers d'une portion radiale du canal, passe dans la partie axiale du canal, et sort au travers de l'orifice de sortie radial. Le passage obligé du produit au travers de ce canal axial ménagé à l'intérieur du piston, rend le dispositif tout particulièrement inadapté pour des forts débits, en particulier pour des produits à forte viscosité. De plus, un tel canal axial, est sujet à encrassement, en particulier après une longue période d'inutilisation, pouvant rendre le dispositif totalement inutilisable. Enfin, la distribution localisée du produit au creux de la main est des plus difficile à obtenir.

Du document EP-0 995 976, on connait un embout doseur configuré pour être monté dans un récipient à paroi déformable, de telle sorte qu'une contrainte exercée sur les parois du récipient déplace un piston de l'embout doseur et permette ainsi la délivrance d'une dose de produit.

D'autres dispositifs doseurs sont également décrits dans les documents US-A-3 338 475, US-A-4 376 495, US-A-4 941 598, US-A-5 037 007, ou US-A-5 636 765. Tous ces dispositifs présentent un certain nombre de problèmes. Parmi ces problèmes figurent notamment le nombre de pièces relativement important, et la complexité qui en résulte, le coût de revient, la difficulté à l'utilisation, les problèmes d'étanchéité, etc..

Aussi, est-ce un des objets de l'invention que de fournir un embout doseur résolvant en tout ou partie, les problèmes discutés en référence aux dispositifs de la technique antérieure.

C'est en particulier un objet de l'invention que de fournir un embout doseur, facilement utilisable, et à faible coût de revient.

C'est un autre objet de l'invention que de fournir un embout doseur, particulièrement adapté à la distribution de produits à forte viscosité.

C'est encore un autre objet de l'invention que de fournir un embout doseur, permettant, pour une pression exercée dans des conditions identiques, notamment sur les parois du récipient, de distribuer une dose identique de produit.

C'est encore un autre objet de l'invention que de pouvoir, sélectivement, jouer à volonté sur la quantité de produit distribué.

C'est encore un objet de l'invention que de fournir un ensemble de conditionnement et de distribution équipé d'un embout doseur selon l'invention.

D'autres objets encore apparaîtront dans la description détaillée qui suit.

Selon l'invention, ces objets sont atteints en réalisant un embout doseur, tel que défini dans la revendication 1.

La composante continue correspond à la quantité de produit passant du récipient vers la chambre à volume variable avant que le piston n'atteigne la seconde position. En effet, au moins lorsque le piston se déplace de la première à la seconde position, et réciproquement lorsqu'il retourne de la seconde à la première position, la chambre à volume variable est en communication avec le récipient.

Au sens de la présente demande, les "conditions d'exercice de la pression" s'entendent principalement de la valeur de la pression exercée et de la durée pendant laquelle cette pression est exercée. Ainsi, une pression de forte valeur appliquée pendant une courte durée provoquera la distribution d'une dose essentiellement à composante fixe. En effet, une forte pression, appliquée brusquement provoquera le passage rapide du piston dans la position où l'orifice de sortie est obturé, limitant ainsi le volume de produit pouvant passer en continu du récipient vers la chambre à volume variable.

A l'inverse, une pression de plus faible valeur, appliquée pendant une plus longue période, provoquera la distribution d'une dose à forte composante continue. En effet, et à l'extrême, une telle force modérée ne sera pas suffisante pour faire passer le piston dans la position dans laquelle l'orifice de sortie est obturé. De ce fait, la distribution pourrait se poursuivre en continu jusqu'à vidange complète du récipient.

De préférence, le produit est pressurisé à l'intérieur du récipient en réalisant ce dernier sous forme d'un récipient à parois déformables. De telles parois, en réponse à une pression exercée perpendiculairement à leur surface, se déforment élastiquement de manière à réduire le volume du récipient, et à pressuriser de manière correspondante le produit à l'intérieur du récipient. Lorsque cesse la pression sur les parois, ces dernières reprennent leur forme initiale.

L'expérience montre qu'à l'utilisation, un utilisateur donné exerce une pression sur les parois du récipient, avec sensiblement la même intensité et pendant sensiblement une même durée. De ce fait, la dose distribuée peut varier d'un utilisateur à un autre. Toutefois, chaque utilisateur aura la possibilité, en respectant de manière toute naturelle, les mêmes conditions d'exercice de la force sur les parois du récipient, de distribuer une dose sensiblement identique à chaque utilisation. En effet, la composante continue est sensiblement identique d'une utilisation à l'autre lorsque les conditions d'exercice de la force sont sensiblement identiques.

En revanche, lors d'une utilisation particulière, si l'utilisateur a besoin de distribuer une dose plus importante (dans le cas d'un shampooing lorsque les cheveux sont particulièrement sales), il lui suffit de modifier les conditions d'exercice de la force pour modifier le volume distribué de façon correspondante.

Le volume distribué est indépendant du degré de vidange du récipient. En effet, la chambre à volume variable forme un tampon qui se remplit de manière sensiblement complète chaque fois que le piston retourne de la seconde position à la première, et ce quelque soit le niveau de produit restant dans le récipient.

Alternativement, la pressurisation du produit peut se faire au moyen d'un piston monté à coulisse à l'intérieur d'un récipient cylindrique, ou de tout autre moyen équivalent.

Le degré d'obturation du (ou des) orifice(s) de sortie, lorsque le piston occupe lesdites première et seconde positions, dépend dans une large mesure de la viscosité du produit, l'essentiel étant que, lorsque le récipient équipé d'un embout selon l'invention est retourné tête en bas, le produit ne coule pas sous l'effet de son poids via le (ou les) orifice(s) de sortie. Ainsi, pour un produit très visqueux, et en dimensionnant de manière appropriée l'orifice de sortie, il pourra ne pas être utile de prévoir de moyens spécifiques à cet effet, la viscosité du produit assurant en quelque sorte "l'auto-obturation" de l'orifice de sortie. Pour des compositions moins visqueuses, on prévoira des moyens spécifiques à cet effet. Les moyens assurant la fermeture de l'orifice de sortie lorsque le piston est dans la première position peuvent être identiques ou distincts des moyens assurant la fermeture de l'orifice de sortie lorsque le piston est dans la seconde position. L'obturation de l'orifice de sortie peut être assurée par tout moyen disposé dans l'orifice de sortie, ou au voisinage de ce dernier, de manière à l'obturer, ou encore par tout moyen apte à isoler l'orifice de sortie du produit contenu dans le récipient.

Le piston est traversé par, et/ou délimite, au moins un passage assurant une communication permanente entre le récipient et la chambre à volume variable. Ces passages, lorsque le piston passe de la première position à la seconde, autorisent le passage d'un volume de produit dans la chambre à volume variable, correspondant à la composante continue de la dose. Lorsque le piston retourne dans la première position, ces passages et/ou orifices permettent le remplissage immédiat de la chambre à volume variable.

Selon un premier mode de réalisation, au moins un passage périphérique est délimité par un bord périphérique du piston, en combinaison avec une surface interne du corps de ladite chambre. Selon un mode de réalisation spécifique, trois passages périphériques sont disposés régulièrement en regard du bord périphérique du piston, et séparés par trois portions de guidage correspondantes du piston.

En outre, le piston peut comprendre au moins un passage traversant le piston et débouchant sur une première face disposée en regard du récipient, et sur une seconde face, opposée à la première, disposée en regard de la chambre à volume variable.

De préférence, le piston comprend une pluralité de passages traversant le piston, et espacés de manière régulière sur la surface de ce dernier. Selon un mode de réalisation spécifique, trois orifices d'un diamètre compris entre 2 mm et 2,5 mm sont espacés de manière régulière, au voisinage du bord périphérique du piston.

Il est clair que le nombre et la configuration des passages et/ou orifices assurant la communication permanente entre le récipient et la chambre à volume variable dépend dans une large mesure de la viscosité du produit, et de la valeur maximale que l'on souhaite conférer à la composante continue de la dose distribuée. Plus la section totale des passages et/ou orifices est grande, plus la composante continue de la dose pourra être grande.

Avantageusement, le piston est configuré de sorte que, lorsqu'il est dans la deuxième position, il isole l'orifice de sortie de la chambre à volume variable. A cet effet, le piston peut, du côté tourné en direction de l'orifice de sortie, former une gorge dans laquelle vient s'engager le bord libre d'une jupe axiale formée autour de l'orifice de sortie, et avec laquelle le piston vient en engagement lorsqu'il est dans la seconde position.

Avantageusement, des moyens de rappel, notamment sous forme d'un ressort hélicoïdal, sont prévus pour, lorsque cesse la pression du produit sur le piston, ce dernier soit rappelé élastiquement dans la première position. Un tel ressort hélicoïdal, lorsque les spires qui le forment sont jointives (dans la seconde position du piston) peut faire office d'organe de fermeture de l'orifice de sortie de la chambre à volume variable.

De préférence, l'orifice de sortie de la chambre à volume variable est formé dans une paroi d'extrémité du corps de l'embout doseur, disposée en regard du piston, et à distance de ce dernier lorsque le piston est dans la seconde position.

Selon une autre caractéristique avantageuse de l'invention, une membrane élastiquement déformable est disposée dans l'orifice de sortie, ladite membrane comportant au moins une fente, fermée en l'absence de pression à l'intérieur de l'embout doseur, et apte à s'ouvrir en réponse à une pression exercée par le produit contenu dans la chambre à volume variable. Ainsi, la membrane améliore la fermeture de l'orifice de sortie lorsque le piston est dans la première position. La membrane peut être collée, claquée, ou soudée autour de l'orifice de sortie. Une telle membrane permet en outre de maintenir l'orifice de sortie dans un état de propreté satisfaisant, et permet d'interrompre le flux de produit de manière instantanée.

Le degré de fermeture de la fente dépend dans une large mesure de la viscosité du produit. Ainsi, en fonction de la viscosité du produit, les bords qui délimitent la fente pourront être plus ou moins jointifs, l'essentiel étant qu'ils soient suffisamment proches pour retenir le produit à l'intérieur de l'embout doseur lorsqu'un récipient équipé d'un tel embout doseur, est retourné tête en bas.

Avantageusement, ladite membrane est apte, en réponse à une pression exercée par le produit contenu dans la chambre à volume variable, à occuper un profil convexe tourné vers l'extérieur de l'embout doseur, et, par un phénomène d'aspiration lorsque les parois reprennent leur forme initiale, et lorsque le piston retourne de la seconde position à la première, à se retourner pour occuper un profil convexe tourné vers l'intérieur du récipient. Lors de ce retournement de la membrane vers l'intérieur de l'embout doseur, une entrée d'air à destination du récipient s'effectue. En effet, le retournement de la membrane confère à la fente une orientation propre à autoriser l'entrée d'air à l'intérieur de l'embout doseur et à empêcher toute sortie intempestive de produit.

Une telle membrane peut être réalisée en un matériau choisi parmi les élastomères thermoplastiques ou réticulés, notamment, les silicones, les latex naturels ou synthétiques, les EPDM, les polyuréthanes, les mélanges de polypropylène et de SBS, SEBS, ou EPDM, les polyéthylènes de très basse densité, les mélanges à base de polyesters glycols (TPU) ou de polyéther glycols (PEBA et COPE), les chlorures de polyvinyle souples (PVC).

Selon un autre aspect de l'invention, on réalise également un ensemble pour le conditionnement et la distribution dosée d'un produit (P), notamment cosmétique, comprenant un récipient formé d'un corps dont une extrémité est fermée par un fond, l'autre extrémité formant un col dont un bord libre délimite une ouverture, un embout doseur selon l'invention étant monté fixement sur ledit col. Un tel ensemble, de par sa configuration, est destiné à être utilisé en position tête en bas. Le récipient peut se présenter sous forme d'un tube, ou d'un flacon. Sa section peut être quelconque, en particulier ovale, elliptique ou circulaire. Un capuchon peut être prévu pour, notamment en position de stockage, recouvrir de manière amovible ledit embout doseur. Avantageusement, l'embout doseur est monté dans l'axe du récipient. Toutefois, il ne s'agit pas là d'une caractéristique nécessaire. Dans certains cas il peut être souhaitable de monter l'embout doseur avec un angle par rapport à l'axe du récipient, afin d'améliorer le taux de vidange du récipient.

Le corps du récipient peut présenter des parois aptes à s'écraser lorsqu'une pression (F) est exercée sur le récipient, de façon sensiblement perpendiculaire auxdites parois, et à revenir à leur forme initiale lorsque cesse ladite pression. D'autres moyens toutefois, notamment un piston, pourraient être envisagés pour pressuriser le produit en vue d'en forcer la sortie au travers de l'embout doseur.

Un tel ensemble est particulièrement adapté pour le conditionnement et la distribution dosée d'un produit cosmétique, notamment un shampooing, un après-shampooing, un gel de coiffage, un lait, ou une crème de soin.

L'invention consiste, mises à part les dispositions exposées ci-dessus, en un certain nombre d'autres dispositions qui seront explicitées ci-après, à propos d'exemples de réalisation non limitatifs, décrits en référence aux figures annexées, parmi lesquelles :
- les figures 1A-1B illustrent un récipient équipé d'un embout doseur selon la présente invention. Dans la figure 1A, le récipient est en position de repos. A la figure 1B, le récipient est en position de distribution.
- la figure 2 représente une vue en coupe axiale d'un mode de réalisation de l'embout doseur selon l'invention; et
- les figures 3A-3D illustrent les différentes étapes du fonctionnement de l'embout distributeur de la figure 2.

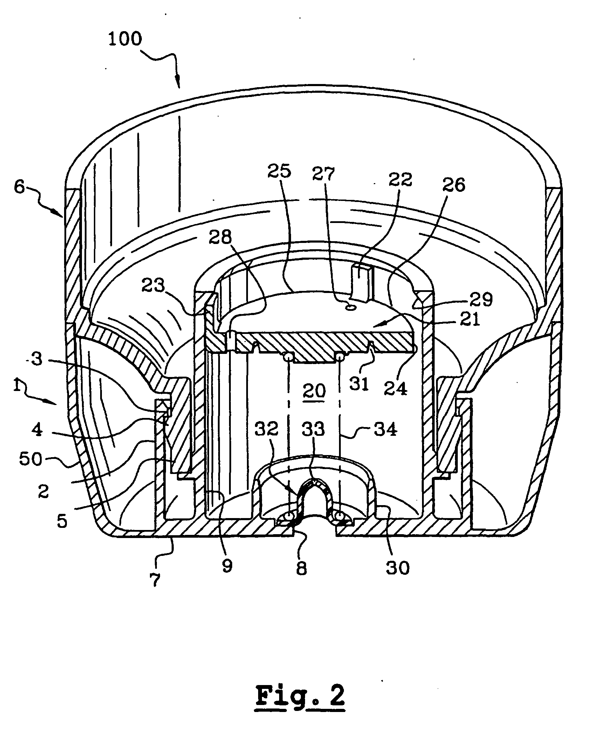

L'embout 1 représenté à la figure 2, comprend une jupe d'habillage 50 et une jupe d'accrochage 2 dont la surface interne comprend un bourrelet 3 apte à coopérer par encliquetage avec un bourrelet correspondant 4 formé sur la surface extérieure du col 5 d'un récipient 6 (représenté en position tête en bas), notamment un flacon à parois déformables. Bien évidemment, d'autres moyens pourraient être utilisés pour assurer le montage de l'embout 1 sur le récipient 6 (vissage, collage, soudure, etc.)

Une extrémité des jupes d'accrochage 2 et d'habillage 50, est fermée par une paroi transversale 7 percée en son centre d'un orifice de sortie 8. L'embout doseur 1 comprend en outre une jupe 9 d'axe X, concentrique avec la jupe latérale 2, de diamètre légèrement inférieur au diamètre intérieur du goulot 5 de manière à s'insérer de façon serrante à l'intérieur dudit goulot. Une lèvre d'étanchéité (non représentée) peut parfaire l'étanchéité du montage de l'embout doseur 1 sur le récipient 6.

La chambre à volume variable 20 qui va maintenant faire l'objet d'une description détaillée comprend un corps cylindrique constitué par la jupe 9, à l'intérieur duquel est guidé à coulisse un piston 21. Le bord périphérique 24 du piston 21 présente une pluralité de nervures 22, 23 espacées régulièrement, et délimitant en combinaison avec le bord périphérique 24 du piston 21 et avec la surface interne de la jupe 9, une pluralité de passages périphériques 25, 26 dont la fonction sera explicitée plus en détail par la suite. Les nervures 22 et 23 assurent le guidage du piston 21 lors de son déplacement à coulisse dans le corps cylindrique 9. Selon un mode de réalisation spécifique, le piston comporte trois nervures délimitant trois passages périphériques dont la largeur radiale est de l'ordre de 1 mm.

En outre, le piston est traversé par une pluralité d'orifices 27, 28 débouchant d'une part à l'intérieur de la chambre à volume variable 20, et d'autre part, du côté tourné en direction du récipient 6. Selon un mode de réalisation spécifique, on réalise trois trous espacés régulièrement au voisinage de la périphérie du piston, et dont le diamètre est d'environ 2,2 mm.

Le mouvement du piston à l'intérieur du corps cylindrique 9 est limité en haut par la présence d'un bourrelet 29 formé sur la surface interne de la jupe 9, au voisinage de son extrémité libre. Il est limité en bas par une jupe 30 entourant l'orifice de sortie 8 et dont un bord libre est destiné à s'insérer de manière étanche à l'intérieur d'une gorge annulaire 31 formée sur la surface du piston tournée en direction de l'orifice de sortie 8.

En l'absence de pression exercée par le produit sur le piston 21, du côté du récipient 6, le piston 21 est contraint en butée contre le bourrelet 29 au moyen d'un ressort hélicoïdal 34 dont une extrémité est en appui sur la surface interne de la paroi d'extrémité 7, et dont l'autre extrémité est en appui contre le piston 21.

Une membrane en élastomère 32 est disposée dans l'orifice de distribution 8. Une telle membrane peut être collée, claquée ou soudée tout autour de l'orifice de distribution 8. La membrane 32 comporte au moins une fente 33, fermée en l'absence de pression à l'intérieur de l'embout doseur, et apte à s'ouvrir en réponse à une pression exercée par le produit contenu à l'intérieur de la chambre à volume variable 20.

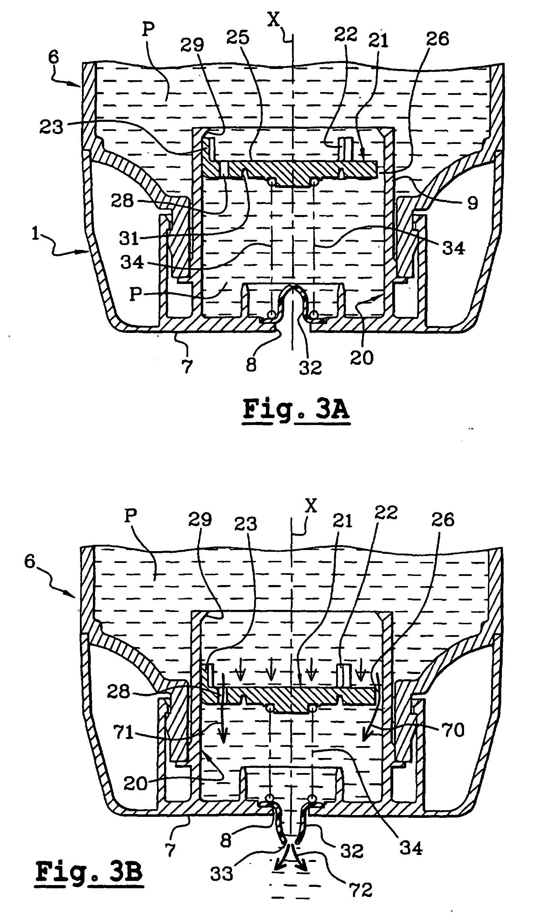

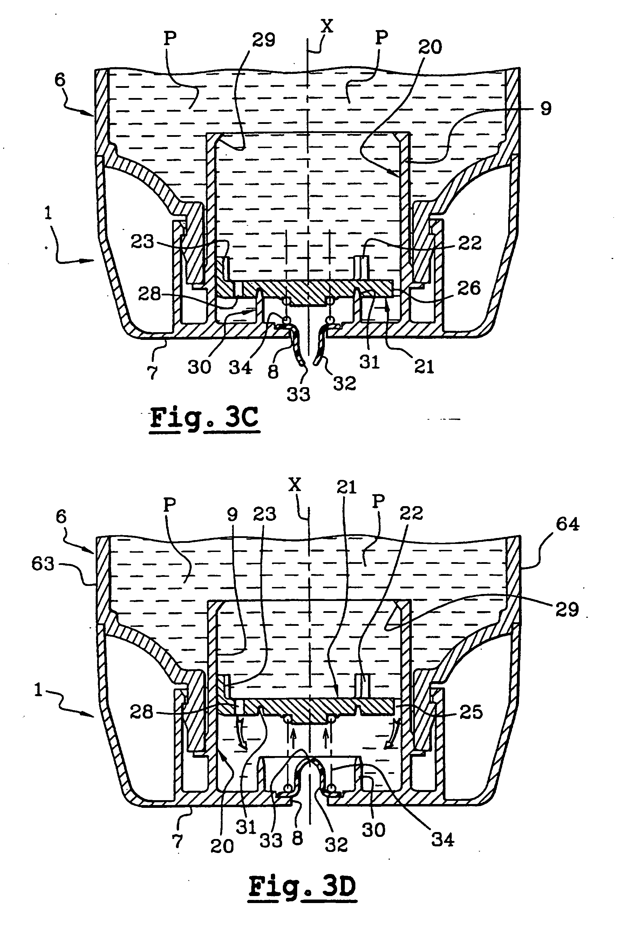

La membrane 32 est configurée de sorte que, à la manière d'une "tétine", en réponse à une pression exercée par le produit contenu dans la chambre à volume variable 20, elle présente un profil convexe tourné vers l'extérieur de l'embout doseur (voir figure 3B). Par un phénomène d'aspiration lorsque le piston 21 retourne en position haute, et lorsque les parois reprennent leur position non déformée, la membrane 32 se retourne pour occuper un profil convexe tourné vers l'intérieur du récipient, tel que représenté à la figure 2, ou aux figures 3A et 3D.

Ainsi, le piston 21 est mobile axialement entre : a) une position haute dans laquelle il est en appui contre le bourrelet 29. Dans cette position l'orifice de sortie 8 de la chambre à volume variable est fermé de manière étanche au produit par la tétine 32 ; et b) une position basse dans laquelle la gorge 31 du piston 21 est en engagement avec le bord libre de la jupe 30, isolant ainsi l'orifice de distribution 8 de la chambre à volume variable 20.

Quoi que non représentées, il est possible de ménager des fenêtres dans la jupe cylindrique 9, notamment au voisinage de sa partie supérieure, de manière à autoriser un ou plusieurs flux de produit depuis le récipient 6 vers la chambre à volume variable 20, selon une direction autre la direction axiale.

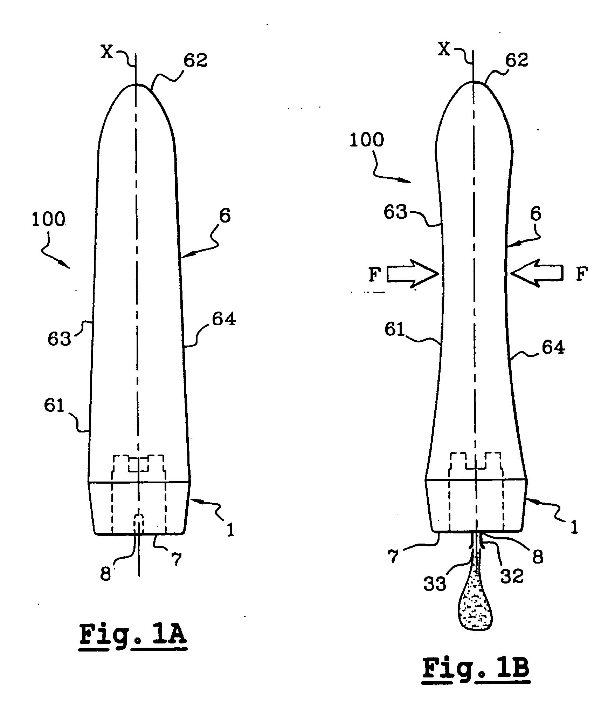

Tel que représenté aux figures 1A et 1B, l'ensemble 100 sur lequel est monté l'embout doseur 1 selon l'invention, est constitué d'un flacon 6, par exemple, en polyéthylène ou polypropylène. Le flacon 6 comporte un corps 61 fermé par un fond 62. Le corps est de section transversale allongée et est formé de deux grandes faces 63, 64, déformables "élastiquement" sous l'effet d'une pression F exercée, de la manière illustrée à la figure 1B, perpendiculairement aux grands côtés du flacon. Dans la position de distribution illustrée à la figure 1B, en réponse à une pression F exercée sur les parois du flacon, perpendiculairement à ses grandes faces, le produit P est distribué, selon un flux essentiellement axial, au travers de la fente 33 ménagée dans la membrane 32 disposée à l'intérieur de l'orifice de sortie 8 traversant la paroi d'extrémité 7. Pendant la distribution, à l'exception de la membrane 32, rien n'émerge de façon sensible au delà de la paroi d'extrémité 7.

Les figures 1A-1B, et 3A-3D auxquelles il est maintenant fait référence, illustrent le fonctionnement de l'embout doseur décrit en référence à la figure 2. En position de repos (telle que décrite en référence à la figure 3A), le récipient 6 est de préférence posé tête en bas sur une surface plane. Dans cette position, l'orifice de sortie 8 de la chambre à volume variable 20 est obturé par la tétine 32. Le piston 21, sollicité par le ressort 34 est en butée contre le bourrelet 29 formé par la jupe 9. Les passages périphériques 25, 26, ainsi que les orifices 27, 28 assurent la communication permanente entre le récipient 6 et la chambre à volume variable 20, laquelle s'est remplie de manière quasi-intégrale pendant le retour en position haute du piston 21, lors de la dernière utilisation du dispositif. Cette position de repos correspond également à celle représentée à la figure 1A.

A la figure 3B, une pression est exercée sur les parois latérales du récipient, en maintenant d'une main le récipient 6 tête en bas. Le produit P sous pression, contenu dans le récipient 6, d'une part pousse le piston 21 en direction de l'orifice de sortie 8, et d'autre part, via les passages 25, 26 et orifices 27, 28, passe en continu à l'intérieur de la chambre à volume variable au fur et à mesure que son volume diminue. Ce flux continu de produit en direction de la chambre à volume variable est illustré par les flèches 70 et 71. Le produit sous pression dans la chambre à volume variable 20 provoque également le retournement de la "tétine" 32 vers l'extérieur de l'embout doseur, et, comme illustré à la figure 3B, la sortie du produit de manière localisée (flèche 72) via la fente 33 traversant ladite membrane 32. Cette position de distribution correspond à celle représentée à la figure 1B.

Cette phase de distribution du produit se poursuit jusqu'à ce que le piston 21 soit en appui contre la jupe 30 de la chambre à volume variable 20 (figure 3C). A ce moment, cette dernière est vidée dans son intégralité, à l'exception du volume situé en dessous du bord libre de la jupe 30, lequel volume peut être rendu aussi faible que possible en choisissant de manière convenable la configuration du piston 21 ainsi que de la jupe 30. Le ressort 34 est comprimé de manière importante.

Bien entendu, la quantité de produit distribuée est fonction de la façon dont l'utilisateur pressurise les parois du récipient. Toutefois, à conditions de pressurisation identiques (propres à chaque utilisateur), la quantité de produit distribuée est sensiblement la même, à plus ou moins environ 20%. En revanche, en modifiant les conditions d'exercice de la pression sur les parois du récipient, notamment en appuyant plus doucement sur une période plus longue (par opposition à un appui bref et fort), la dose distribuée sera plus importante en raison de la quantité plus importante de produit qui aura passé en continu du récipient 6 vers la chambre 20 avant que le piston 21 ne soit en appui sur la jupe 30.

A la figure 3D, après avoir relâché la pression exercée sur les parois 63, 64 du flacon, ces dernières reviennent dans leur position initiale. Sous l'action de la force de rappel du ressort 34, le piston 21 remonte dans la direction opposée à la paroi d'extrémité 7. Ce faisant, sous la pression du piston remontant dans la première position, le produit, situé du côté du piston 21 tourné en direction du récipient, flue dans la chambre à volume variable 20 via les passages 25, 26 et orifices 27, 28. Lorsque le piston 21 est en butée contre le bourrelet 29, le mouvement du piston 21 s'arrête. La chambre à volume variable est sensiblement pleine. Simultanément à la remontée du piston 21, la dépression régnant l'intérieur du récipient, ainsi qu'à l'intérieur de la chambre à volume variable 20, provoque le retournement de la "tétine" 32 vers l'intérieur de l'embout doseur 1 et une entrée d'air via la ou les fentes 33 qui la traversent. L'air entre également dans le récipient, ce qui permet de compenser à l'intérieur de ce dernier, le volume de produit distribué. Le dispositif est ainsi prêt pour une nouvelle utilisation.

Dans la description détaillée qui précède, il a été fait référence à des modes de réalisation préférés de l'invention.

## Revendications

1. Embout doseur (1) destiné à équiper un récipient (6) contenant un produit (P), ledit embout comprenant une chambre à volume variable (20) équipée d'un piston (21), guidé à coulisse à l'intérieur du corps (9) de ladite chambre, ledit piston (21) étant apte, en réponse à une pression exercée par le produit, à se déplacer entre une première position dans laquelle la chambre (20) est de volume maximal et une seconde position dans laquelle la chambre (20) est de volume minimal, ledit déplacement provoquant la distribution d'un volume de produit (P) au travers d'au moins un orifice de sortie (8), obturé lorsque le piston (21) est dans lesdites première et seconde positions, ladite chambre (20) étant apte à communiquer avec le récipient (6) de sorte que ledit volume de produit distribué en réponse audit déplacement, présente une composante fixe correspondant à la différence entre le volume maximal et le volume minimal, et une composante continue, liée aux conditions d'exercice de la pression du produit (P) sur le piston (21)
**caractérisé en ce que** le piston (21) est traversé par, et/ou délimite, au moins un passage (25-28) assurant une communication permanente entre le récipient (6) et la chambre à volume variable (20).

2. Embout doseur (1) selon la revendication 1 **caractérisé en ce qu'**au moins un passage périphérique (25, 26) est délimité par un bord périphérique du piston (21), en combinaison avec une surface interne du corps (9) de ladite chambre (20).

3. Embout doseur (1) selon la revendication 2 **caractérisé en ce qu'**il comprend une pluralité de passages périphériques (25, 26) séparés par une pluralité de portions (22, 23) assurant le guidage du mouvement à coulisse du piston (21) dans le corps (9) de la chambre à volume variable (20).

4. Embout doseur (1) selon l'une quelconque des revendications 1 à 3 **caractérisé en ce qu'**au moins un passage (27, 28) traverse le piston (21) et débouche sur une première face disposée en regard du récipient (6), et sur une seconde face, opposée à la première, disposée en regard de la chambre à volume variable (20).

5. Embout doseur (1) selon la revendication 4 **caractérisé en ce qu'**il comprend une pluralité de passages (27, 28) traversant le piston (21), et espacés de manière régulière sur la surface de ce dernier.

6. Embout doseur (1) selon l'une quelconque des revendications précédentes **caractérisé en ce que** le piston (21) est configuré de sorte que, lorsqu'il est dans la deuxième position, il isole ledit orifice de sortie (8) de la chambre à volume variable (20).

7. Embout doseur (1) selon l'une quelconque des revendications qui précèdent **caractérisé en ce que** des moyens de rappel (34), notamment sous forme d'un ressort hélicoïdal, sont prévus pour, lorsque cesse la pression du produit (P) sur le piston (21), ce dernier soit rappelé élastiquement dans la première position.

8. Embout doseur (1) selon l'une quelconque des revendications 1 à 7 **caractérisé en ce que** ledit orifice de sortie (8) de la chambre à volume variable (20) traverse une paroi d'extrémité (7) du corps (9) de l'embout doseur, disposée en regard du piston (21), et à distance de ce dernier lorsque le piston (21) est dans la seconde position.

9. Embout doseur (1) selon la revendication 8 **caractérisé en ce qu'**une membrane élastiquement déformable (32) est disposée dans l'orifice de sortie (8), ladite membrane (32) comportant au moins une fente (33), fermée en l'absence de pression suffisante à l'intérieur de l'embout doseur (1), et apte à s'ouvrir en réponse à une pression exercée par le produit (P) contenu à l'intérieur de la chambre à volume variable (20).

10. Embout doseur (1) selon la revendication 9 **caractérisé en ce que** ladite membrane (32) est apte, en réponse à une pression exercée par le produit (P) contenu dans la chambre à volume variable (20), à occuper un profil convexe tourné vers l'extérieur de l'embout doseur (1), et à occuper un profile convexe tourné vers l'intérieur de la chambre (20) lorsque le piston retourne de la seconde position à la première.

11. Embout doseur (1) selon la revendication 9 ou 10 **caractérisé en ce que** ladite membrane (32) est réalisée en un matériau choisi parmi les élastomères thermoplastiques ou réticulés, notamment, les silicones, les latex naturels ou synthétiques, les EPDM, les polyuréthanes, les mélanges de polypropylène et de SBS, SEBS, ou EPDM, les polyéthylènes de très basse densité, les mélanges à base de polyesters glycols (TPU) ou de polyéther glycols (PEBA et COPE), les chlorures de polyvinyle souples (PVC).

12. Ensemble (100) pour le conditionnement et la distribution dosée d'un produit (P), notamment cosmétique, comprenant un récipient (6) formé d'un corps (61) dont une extrémité est fermée par un fond (62), l'autre extrémité formant un col (5) dont un bord libre délimite une ouverture, un embout doseur (1) étant monté fixement sur ledit col, **caractérisé en ce que** l'embout doseur (1) est conforme à l'une quelconque des revendications précédentes.

13. Ensemble (100) selon la revendication 12 **caractérisé en ce que** le corps (61) présente des parois (63, 64) aptes à s'écraser lorsqu'une pression (F) est exercée sur le récipient (6) perpendiculairement auxdites parois, et à revenir à leur forme initiale lorsque cesse ladite pression.

14. Utilisation d'un ensemble (100) selon l'une quelconque des revendications 12 ou 13 pour le conditionnement et la distribution dosée d'un produit cosmétique, notamment un shampooing, un après shampooing, un gel de coiffage, un lait ou une crème de soin.

## Claims

1. Dosing nozzle (1), intended for equipping a container (6) containing a product (P), the said nozzle comprising a chamber of variable volume (20) equipped with a piston (21), guided slideably inside the body (9) of the said chamber, the said piston (21) being capable, in response to a pressure exerted by the product, of moving between a first position, in which the chamber (20) has a maximum volume, and a second position in which the chamber (20) has a minimum volume, the said movement giving rise to the dispensing of a volume of product (P) through at least one outlet (8), which is closed off when the piston (21) is in the said first and second positions, the said chamber (20) being capable of communicating with the container (6) such that the said volume of product dispensed in response to the said movement has a fixed component corresponding to the difference between the maximum volume and the minimum volume, and a continuous component linked to the conditions of exerting the pressure of the product (P) on the piston (21), **characterized in that** the piston (21) is traversed by and/or delimits at least one passage (25-28) providing permanent communication between the container (6) and the chamber of variable volume (20).

2. Dosing nozzle (1) according to Claim 1, **characterized in that** at least one peripheral passage (25, 26) is delimited by a peripheral edge of the piston (21), in combination with an inner surface of the body (9) of the said chamber (20).

3. Dosing nozzle (1) according to Claim 2, **characterized in that** it comprises a plurality of peripheral passages (25, 26) separated by a plurality of portions (22, 23) providing guiding of the sliding movement of the piston (21) in the body (9) of the chamber of variable volume (20).

4. Dosing nozzle (1) according to any one of Claims 1 to 3, **characterized in that** at least one passage (27, 28) traverses the piston (21) and emerges on a first face arranged facing the container (6) and on a second face, opposite the first one, arranged facing the chamber of variable volume (20).

5. Dosing nozzle (1) according to Claim 4, **characterized in that** it comprises a plurality of passages (27, 28) traversing the piston (21) and spaced in a uniform manner over the surface of the latter.

6. Dosing nozzle (1) according to any one of the preceding claims, **characterized in that** the piston (21) is configured such that, when it is in the second position, it isolates the said outlet (8) of the chamber with variable volume (20).

7. Dosing nozzle (1) according to any one of the preceding claims, **characterized in that** return means (34), especially in the form of a helical spring, are provided so that, when the pressure of the product (P) on the piston (21) ceases, the piston is returned elastically into the first position.

8. Dosing nozzle (1) according to any one of Claims 1 to 7, **characterized in that** the said outlet (8) of the chamber of variable volume (20) traverses an end wall (7) of the body (9) of the dosing nozzle, arranged facing the piston (21) and at a distance from the latter when the piston (21) is in the second position.

9. Dosing nozzle (1) according to Claim 8, **characterized in that** an elastically deformable membrane (32) is arranged in the outlet (8), the said membrane (32) including at least one slot (33), closed in the absence of sufficient pressure inside the dosing nozzle (1) and capable of opening in response to a pressure exerted by the product (P) contained inside the chamber of variable volume (20).

10. Dosing nozzle (1) according to Claim 9, **characterized in that** the said membrane (32) is capable, in response to a pressure exerted by the product (P) contained in the chamber of variable volume (20), of occupying a convex profile facing towards the outside of the dosing nozzle (1) and of occupying a convex profile facing towards the inside of the chamber (20) when the piston returns from the second position to the first position.

11. Dosing nozzle (1) according to Claim 9 or 10, **characterized in that** the said membrane (32) is produced from a material chosen from thermoplastic or crosslinked elastomers, especially silicones, natural or synthetic latexes, EPDMs, polyurethanes, mixtures of polypropylene and of SBS, SEBS or EPDM, very-low-density polyethylenes, mixtures based on polyester glycols (TPU) or polyether glycols (PEBA and COPE), or flexible polyvinyl chlorides (PVC).

12. Assembly (100) for the packaging and dosed dispensing of a product (P), especially a cosmetic product, comprising a container (6) formed from a body (61), one end of which is closed by a base (62), the other end forming a neck (5) of which a free edge delimits an opening, a dosing nozzle (1) being fitted securely on the said neck, **characterized in that** the dosing nozzle (1) is in accordance with any one of the preceding claims.

13. Assembly (100) according to Claim 12, **characterized in that** the body (61) has walls (63, 64) capable of being squashed when a pressure (F) is exerted on the container (6) perpendicularly to the said walls and of returning to their initial shape when the said pressure ceases.

14. Use of an assembly (100) according to either of Claims 12 or 13, for the packaging and dosed dispensing of a cosmetic product, especially a shampoo, a conditioner, a hair gel, or a beauty-care cream or milk.

## Patentansprüche

1. Dosieraufsatz (1) zur Bestückung eines ein Produkt (P) enthaltenden Behälters (6), wobei der Aufsatz eine Kammer mit variablem Volumen (20) aufweist, die mit einem Kolben (21) ausgestattet ist, der gleitend innerhalb des Körpers (9) der Kammer geführt wird, wobei der Kolben (21) als Reaktion auf einen vom Produkt ausgeübten Druck fähig ist, sich zwischen einer ersten Stellung, in der die Kammer (20) ein maximales Volumen hat, und einer zweiten Stellung zu verschieben, in der die Kammer (20) ein minimales Volumen hat, wobei die Verschiebung die Ausgabe eines Produktvolumens (P) durch mindestens eine Austrittsöffnung (8) bewirkt, die verschlossen ist, wenn der Kolben (21) in der ersten und der zweiten Stellung ist, wobei die Kammer (20) so mit dem Behälter (6) in Verbindung stehen kann, dass das als Reaktion auf die Verschiebung ausgegebene Produktvolumen eine feste Komponente, die der Differenz zwischen dem maximalen und dem minimalen Volumen entspricht, und eine kontinuierliche Komponente aufweist, die mit den Bedingungen der Ausübung des Drucks des Produkts (P) auf den Kolben (21) verbunden ist, **dadurch gekennzeichnet, dass** der Kolben (21) von mindestens einem Durchgang (25-28) durchquert wird und/oder ihn begrenzt, der eine permanente Verbindung zwischen dem Behälter (6) und der Kammer mit variablem Volumen (20) gewährleistet.

2. Dosieraufsatz (1) nach Anspruch 1, **dadurch gekennzeichnet, dass** mindestens ein Umfangsdurchgang (25, 26) von einem Umfangsrand des Kolbens (21) in Kombination mit einer Innenfläche des Körpers (9) der Kammer (20) begrenzt wird.

3. Dosieraufsatz (1) nach Anspruch 2, **dadurch gekennzeichnet, dass** er mehrere Umfangsdurchgänge (25, 26) aufweist, die durch mehrere Abschnitte (22, 23) getrennt sind, die die Führung der gleitenden Bewegung des Kolbens (21) im Körper (9) der Kammer mit variablem Volumen (20) gewährleisten.

4. Dosieraufsatz (1) nach einem der Ansprüche 1 bis 3, **dadurch gekennzeichnet, dass** mindestens ein Durchgang (27, 28) den Kolben (71) durchquert und an einer ersten Seite, die gegenüber dem Behälter (6) angeordnet ist, und an einer zweiten, der ersten gegenüberliegenden Seite mündet, die gegenüber der Kammer mit variablem Volumen (20) angeordnet ist.

5. Dosieraufsatz (1) nach Anspruch 4, **dadurch gekennzeichnet, dass** er mehrere Durchgänge (27, 28) aufweist, die den Kolben (21) durchqueren und auf dessen Fläche einen gleichmäßigen Abstand haben.

6. Dosieraufsatz (1) nach einem der vorhergehenden Ansprüche, **dadurch gekennzeichnet, dass** der Kolben (21) so konfiguriert ist, dass er, wenn er in der zweiten Stellung ist, die Austrittsöffnung (8) von der Kammer mit variablem Volumen (20) isoliert.

7. Dosieraufsatz (1) nach einem der vorhergehenden Ansprüche, **dadurch gekennzeichnet, dass** Rückstellmittel (34), insbesondere in Form einer Spiralfeder, vorgesehen sind, damit, wenn der Druck des Produkts (P) auf den Kolben (71) endet, letzterer elastisch in die erste Stellung zurückgestellt wird.

8. Dosieraufsatz (1) nach einem der Ansprüche 1 bis 7, **dadurch gekennzeichnet, dass** die Austrittsöffnung (8) der Kammer mit variablem Volumen (20) eine Endwand (7) des Körpers (9) des Dosieraufsatzes durchquert, die gegenüber dem Kolben (21) und in Abstand zu diesem angeordnet ist, wenn der Kolben (21) in der zweiten Stellung ist.

9. Dosieraufsatz (1) nach Anspruch 8, **dadurch gekennzeichnet, dass** eine elastisch verformbare Membran (32) in der Austrittsöffnung (8) angeordnet ist, wobei die Membran (32) mindestens einen Schlitz (33) aufweist, der in Abwesenheit eines ausreichenden Drucks innerhalb des Dosieraufsatzes (1) geschlossen ist, und der sich als Reaktion auf einen von dem im Inneren der Kammer mit variablem Volumen (20) enthaltenen Produkt (P) ausgeübten Druck öffnen kann.

10. Dosieraufsatz (1) nach Anspruch 9, **dadurch gekennzeichnet, dass** die Membran (32) als Reaktion auf einen von dem in der Kammer mit variablem Volumen (20) enthaltenen Produkt (P) ausgeübten Druck fähig ist, ein konvexes Profil anzunehmen, das nach außerhalb des Dosieraufsatzes (1) gerichtet ist, und ein nach innerhalb der Kammer (20) gerichtetes konvexes Profil anzunehmen, wenn der Kolben von der zweiten in die erste Stellung zurückkehrt.

11. Dosieraufsatz (1) nach Anspruch 9 oder 10, **dadurch gekennzeichnet, dass** die Membran (32) aus einem Material hergestellt wird, das aus den thermoplastischen oder vernetzten Elastomermaterialien ausgewählt wird, insbesondere den Siliconen, den natürlichen oder synthetischen Latexmaterialien, den EPDM, den Polyurethanen, den Mischungen aus Polypropylen und SBS, SEBS, oder EPDM, den Polyethylenen sehr niedriger Dichte, den Mischungen auf der Basis von Polyesterglycolen (TPU) oder von Polyetherglycolen (PESA und COPE), den weichen Polyvinylchloriden (PVC).

12. Einheit (100) zur Verpackung und zur dosierten Ausgabe eines Produkts (P), insbesondere eines kosmetischen Produkts, die einen Behälter (6) aufweist, der von einem Körper (61) gebildet wird, von dem ein Ende von einem Boden (62) verschlossen wird, während das andere Ende einen Hals (5) bildet, von dem ein freier Rand eine Öffnung begrenzt, wobei ein Dosieraufsatz (1) fest auf den Hals montiert ist, **dadurch gekennzeichnet, dass** der Dosieraufsatz (1) einem der vorhergehenden Ansprüche entspricht.

13. Einheit (100) nach Anspruch 12, **dadurch gekennzeichnet, dass** der Körper (61) Wände (63, 64) aufweist, die zusammengedrückt werden können, wenn ein Druck (F) auf den Behälter (6) lotrecht zu den Wänden ausgeübt wird, und in ihre Ursprungsform zurückkommen können, wenn der Druck endet.

14. Verwendung einer Einheit (100) nach einem der Ansprüche 12 oder 13 zur Verpackung und zur dosierten Ausgabe eines kosmetischen Produkts, insbesondere eines Shampoos, einer Spülung, eines Frisiergels, einer Milch oder einer Pflegecreme.
